# EUROPÄISCHE PATENTSCHRIFT

(11) **EP 3 555 574 B1**
(45) Veröffentlichungstag und Bekanntmachung des Hinweises auf die Patenterteilung: **13.09.2023**
(21) Anmeldenummer: 17791403.3
(22) Anmeldetag: 30.10.2017
(51) Int. Cl.: G01F 23/24

(54) **GRENZSTANDSCHALTER MIT AUSFALLSICHERHEITSEINHEIT**
FAIL-SAFE LIMIT LEVEL SWITCH
COMMUTATEUR À COMMANDE PAR NIVEAU À SÛRETÉ INTÉGRÉE

(30) Priorität: 14.12.2016 DE 102016124364
(43) Veröffentlichungstag der Anmeldung: 23.10.2019
(73) Patentinhaber: Endress+Hauser SE+Co. KG, 79689 Maulburg (DE)
(72) Erfinder: DÖTSCH, Michael, 79736 Rickenbach (DE); JEHLE, Max, 79664 Wehr (DE); SANDOR, Izabella, 79650 Schopfheim (DE); WERNET, Armin, 79618 Rheinfelden (DE)
(74) Vertreter: Koslowski, Christine Adelheid
(86) Internationale Anmeldenummer: PCT/EP2017/077762
(87) Internationale Veröffentlichungsnummer: WO 2018/108377

(56) Entgegenhaltungen:
- DE-A1-102008 043 412
- DE-B1- 1 623 991
- DE-U1-202008 011 995
- GB-A- 2 094 003
- US-A1- 2003 128 493

## Beschreibung

Die vorliegende Erfindung betrifft eine Vorrichtung zur Bestimmung und/oder Überwachung zumindest eines vorgegebenen Füllstands eines Mediums in einem Behältnis zumindest mit einer Sensoreinheit und einer mittels eines dynamischen elektrischen Signals betreibbaren Elektronikeinheit. Im Rahmen der vorliegenden Erfindung seien unter dem Begriff Behältnis alle dem Fachmann bekannten Vorrichtungen verstanden, welche dazu ausgestaltet sind, ein Medium zu fassen und/oder zu führen, beispielsweise Behälter oder Rohrleitungen. Unter einem dynamischen elektrischen Signal sei im Rahmen der vorliegenden Erfindung ein zeitlich variables elektrisches Signal verstanden, beispielsweise ein Wechselsignal in Form eines Wechselstroms oder einer Wechselspannung, oder ein pulsweitenmoduliertes Signal (PMW).

Grenzstandschalter in der Prozess- und/oder Automatisierungstechnik können beispielsweise als vibronische Sensoren mit zumindest einer mechanisch schwingfähigen Einheit oder als kapazitive und/oder konduktive Sensoren ausgestaltet sein. Die Grundprinzipien und unterschiedlichen Ausgestaltung sind aus einer Vielzahl von Veröffentlichungen bekannt geworden. Entsprechende Feldgeräte werden von der Anmelderin in großer Vielfalt hergestellt und im Falle von vibronischen Füllstandsmessgeräten beispielsweise unter der Bezeichnung LIQUIPHANT und/oder SOLIPHANT, und im Falle von kapazitiven und/oder konduktiven Messgeräten beispielsweise unter der Bezeichnung LIQUIPOINT vertrieben.

Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur bei einer zumindest teilweisen Bedeckung mit dem Medium ermitteln.

Im Falle eines konduktiven Grenzstandschalters wird dagegen erkannt, ob über ein leitfähiges Medium ein elektrischer Kontakt zwischen einer Sondenelektrode und der Wandung eines leitfähigen Behälters oder einer zweiten Elektrode besteht. Im kapazitiven Messverfahren wird dagegen der Füllstand aus der Kapazität des von einer Sondenelektrode und der Wandung des Behälters oder einer zweiten Elektrode gebildeten Kondensators ermittelt. Je nach Leitfähigkeit des Mediums bildet entweder das Medium selbst oder eine Sondenisolierung das Dielektrikum des Kondensators.

Im Falle von sicherheitskritischen Anwendungen, wie beispielsweise einem Einsatz eines Grenzstandschalters in einem mit einer brennbaren Flüssigkeit gefüllten Behälter, muss das jeweilige Messgerät je nach der konkreten Anwendung unterschiedlichen Sicherheitsanforderungen genügen. In dieser Hinsicht ist beispielsweise der sogenannte SIL-Standard (SIL steht für Safety Integrity Level) gemäß der Normvorschrift IEC61508 bekannt geworden, welcher zwischen vier unterschiedlichen Stufen zur Spezifizierung der Anforderung für die Sicherheitsintegrität von Sicherheitsfunktionen unterscheidet. Die Sicherheitsanforderungsstufe stellt dabei im Prinzip ein Maß für die Zuverlässigkeit des jeweiligen Systems bzw. Messgeräts in Abhängigkeit von einer potentiellen Gefährdung dar. Typischerweise bereitgestellte Sicherheitsfunktionen zur Gewährleistung eines bestimmten Levels für die Sicherheitsintegrität sind beispielsweise gegeben durch Notausschaltungen, oder das Abschalten überhitzter Geräte.

Zur Festlegung eines Sicherheitsintegritätslevels wird beispielsweise das Ausfallverhalten einzelner Baugruppen untersucht. Weiterhin wird das Vorliegen redundanter Strukturen geprüft, sowie das Verhältnis zwischen sicheren und unsicheren, bzw. gefährlichen, Fehlern zu unterscheiden. Aus derartigen Überlegungen kann eine Gesamt-Ausfallrate bestimmt werden, anhand welcher dem jeweiligen System bzw. Messgerät ein bestimmtes Sicherheitsintegritätslevel zugeordnet werden kann.

DE 20 2008 011 995 U1 offenbart beispielsweise eine Füllstandsmesseinrichtung, welche zur Füllstandermittlung in explosionsgefährdeten Tanks geeignet ist, nach dem Stand der Technik.

Der vorliegenden Erfindung liegt die Aufgabe zugrunde, ein Messgerät anzugeben, für welches auf einfache Weise gewährleistet werden kann, dass das Feldgerät hohen Sicherheitsanforderungen genügt.

Diese Aufgabe wird gelöst durch eine Vorrichtung zur Bestimmung und/oder Überwachung zumindest eines vorgegebenen Füllstands eines Mediums in einem Behälter zumindest mit einer Sensoreinheit und einer mittels eines dynamischen elektrischen Signals betreibbaren Elektronikeinheit. Die erfindungsgemäße Elektronikeinheit umfasst zumindest
- eine Begrenzungseinheit, welche dazu ausgestaltet ist, einen elektrischen Strom oder eine elektrische Spannung in zumindest einem Teilbereich der Elektronikeinheit auf einen vorgebbaren Wert zu begrenzen,
- eine Schalteinheit, welche dazu ausgestaltet ist, ein Prozess-Schaltelement, insbesondere ein Relais mit zumindest einem ersten und einem zweiten Schaltzustand, mittels zumindest eines elektrischen Steuersignals zu steuern, und
- eine Signalwandlungseinheit, welche Signalwandlungseinheit dazu ausgestaltet ist, ein dynamisches elektrisches Eingangs-Signal in ein statisches elektrisches Ausgangs-Signal zu wandeln, wobei die Signalwandlungseinheit ferner dazu ausgestaltet ist, einen ggf. vorhanden ungewollten statischen Signalanteil des dynamischen elektrischen Eingangs-Signals, welcher durch eine Fehlfunktion bzw. einen Fehler zumindest einer Komponente der Elektronikeinheit hervorgerufen wurde, auszublenden, und wobei die Signalwandlungseinheit derart angeordnet ist, dass das statische Ausgangs-Signal durch zumindest eine Komponente der Schalteinheit fließt. Ferner ist die Elektronikeinheit dazu ausgestaltet
- die Sensoreinheit mit einem Anregesignal zu beaufschlagen, und von der Sensoreinheit ein Empfangssignal zu empfangen,
- anhand des Empfangssignal zu bestimmen und/oder zu überwachen, ob der vorgegebene Füllstand erreicht ist, und
- in Abhängigkeit davon, ob der vorgegebene Füllstand erreicht ist, das zumindest eine Steuersignal zu erzeugen.

Die erfindungsgemäße Elektronikeinheit gewährleistet vorteilhaft, dass die Ausfallsicherheit des Messgeräts deutlich erhöht wird. Durch das Zusammenspiel der Begrenzungseinheit, der Schalteinheit und der Signalwandlungseinheit wird die Anzahl an möglichen sogenannten unsicheren, bzw. gefährlichen, Fehlern deutlich reduziert. Entsprechend erfüllt das erfindungsgemäße Messgerät hohen Sicherheitsanforderungen, insbesondere der SIL2-Norm.

Die Elektronikeinheit wird erfindungsgemäß mittels eines dynamischen Signals betrieben.

Die Signalwandlungseinheit ist nun insbesondere dazu ausgestellt, dieses dynamische Signal zumindest partiell, also für zumindest eine Komponente der Elektronikeinheit, bevorzugt zumindest eine Komponente der Schalteinheit, in ein statisches Signal zu wandeln. Unter einem statischen Signal sei in der Folge ein zeitlich zumindest abschnittsweise konstantes Signal verstanden, beispielsweise eine Gleichspannung oder ein Gleichstrom. Für die verbleibenden Komponenten und/oder Baugruppen kann vorteilhaft ein dynamisches Signal eingesetzt werden.

In einer Ausgestaltung umfasst die Begrenzungseinheit zumindest einen Spannungsregler, insbesondere einen Längsregler oder einen Schaltregler, einen Transistor, insbesondere einen Feldeffekttransistor, oder einen Verstärker, insbesondere einen Operationsverstärker oder eine Zener-Diode.

In einer weiteren Ausgestaltung umfasst die Schalteinheit zumindest einen Transistor, Thyristor, ein steuerbares Schaltelement und/oder einen Verstärker.

Hinsichtlich der Schalteinheit ist es von Vorteil, wenn diese zumindest zwei baugleiche, in Reihe geschaltete, Elemente umfasst. Beispielsweise handelt es sich bei den beiden baugleichen Elementen um baugleiche Thyristoren. Durch die redundante Ausführung der zwei Elemente der Schalteinheit kann vorteilhaft eine doppelte Ausfallsicherheit erreicht werden.

In einer Ausgestaltung umfasst die Vorrichtung eine Anpassungseinheit, welche Anpassungseinheit dazu ausgestaltet ist, das zumindest eine elektrische Steuersignal auf ein Eingangssignal des Prozess-Schaltelements anzupassen. Eine Signalanpassung wird in dieser Ausgestaltung also durch Hardware-Komponenten realisiert. Alternativ könnte eine Signalanpassung mittels einer Recheneinheit der Elektronikeinheit vorgenommen werden. Letzteres bedingt jedoch eine gegenüber der ersten Variante höhere Rechenleistung und kann entsprechend hinsichtlich des Energieverbrauchs der Vorrichtung nachteilig sein.

Es ist von Vorteil, wenn die Anpassungseinheit zumindest einen Monoflop, einen Transistor, und/oder einen Microcontroller umfasst.

Gemäß der Erfindung ist die Signalwandlungseinheit, dazu ausgestaltet ist, einen statischen Signalanteil des dynamischen Signals, welcher statische Signalanteil durch einen Fehler oder eine Fehlfunktion durch zumindest eine Komponente der Elektronikeinheit hervorgerufenen ist, auszublenden. Es findet also eine Entkopplung ungewollter statischer Signalanteile statt. Auf diese Weise können Folgefehler aufgrund des Vorhandenseins eines ungewollten statischen Signalanteils vermieden werden.

Darüber hinaus bewirkt die Kombination eines dynamischen Signals für die Elektronikeinheit in Zusammenhang mit der zumindest partiellen Ausblendung ungewollter statischer Signalanteile, dass sowohl Einzelfehler einzelner Komponenten der Elektronikeinheit also auch Folgefehler in der Signalübertragung innerhalb der Elektronikeinheit zu keinem gefährlichen Zustand im Sinne der Ausfallsicherheit nach SIL führen können. Wenn es sich bei der zumindest einen Komponente beispielsweise um zumindest eine Komponente der Schalteinheit handelt, kann beispielsweise ein ungewolltes Schalten des Prozess-Schaltelements 9 kann in jedem der genannten Fälle vermieden werden.

Gemäß der Erfindung ist die Signalwandlungseinheit derart angeordnet, dass das statische Ausgangs-Signal durch zumindest eine Komponente der Schalteinheit fließt. Diese Ausgestaltung eignet sich also besonders für eine Schalteinheit, für welche ein statisches Signal notwendig ist. Dies ist beispielsweise der Fall, wenn die Schalteinheit zumindest einen Thyristor umfasst.

Dabei ist es von Vorteil, wenn die Signalwandlungseinheit zumindest eine Einheit zur elektrischen Gleichrichtung, insbesondere umfassend eine Diode, einen Kondensator und/oder einen Widerstand, umfasst.

In einer weiteren besonders bevorzugten Ausgestaltung umfasst die Elektronikeinheit eine Recheneinheit, insbesondere einen Microcontroller.

In diesem Falle ist es von Vorteil, wenn ferner ein Watchdog vorgesehen ist, welcher Watchdog dazu ausgestaltet ist, die Funktionsfähigkeit der Recheneinheit und/oder die Versorgung der Recheneinheit mit elektrischer Energie zu überwachen. Diese Maßnahme erhöht weiter die Ausfallsicherheit des Messgeräts.

Ferner ist es ebenso von Vorteil, wenn eine Spannungsbegrenzungseinheit zur Begrenzung einer Versorgungsspannung der Recheneinheit vorgesehen ist. Bevorzugt umfasst die Spannungsbegrenzungseinheit zumindest einen Längsregler, einen Schaltregler, einen Transistor, insbesondere einen Feldeffekttransistor, oder einen Verstärker, insbesondere einen Operationsverstärker oder eine Zener-Diode.

Die vorliegende Erfindung wird anhand der nachfolgenden Figuren näher erläutert. Es zeigt
Fig. 1 eine schematische Darstellung eines vibronischen Grenzstandschalters gemäß dem Stand der Technik, und
Fig. 2 ein Blockschaltbild einer erfindungsgemäßen Elektronikeinheit.

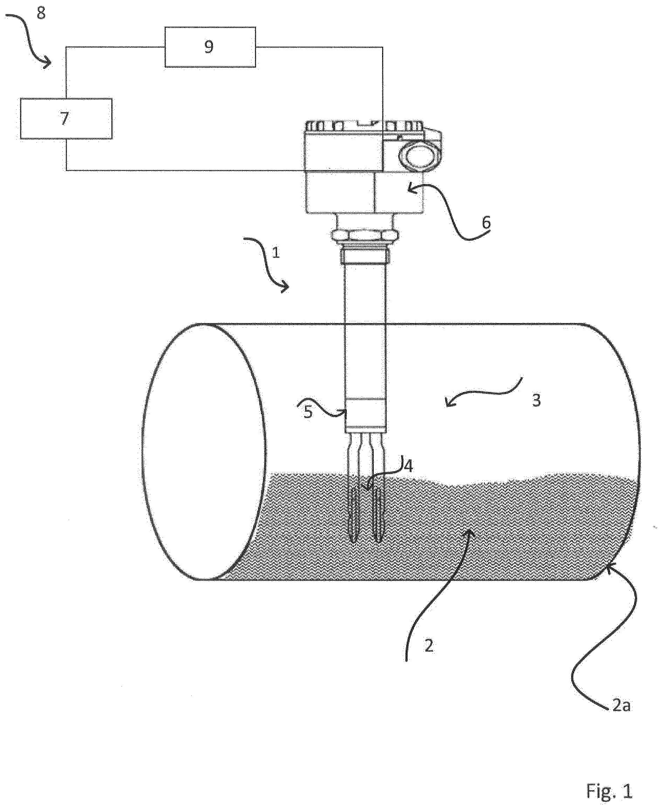

Die nachfolgende Beschreibung bezieht sich ohne Beschränkung der Allgemeinheit auf ein Feldgerät 1 in Form eines vibronischen Sensors zumindest zur Bestimmung und/oder Überwachung eines vorgegebenen Füllstands eines Mediums 2 in einem Behälter 2a. Wie aus Fig. 1 ersichtlich, umfasst in diesem Fall die Sensoreinheit 3 eine mechanisch schwingfähige Einheit 4 in Form einer Schwinggabel, welche teilweise in das Medium 2 eintaucht. Andere bekannte und unter die Erfindung fallende Ausgestaltungen einer mechanisch schwingfähigen Einheit 4 sind beispielsweise durch einen Einstab oder eine Membran gegeben und fallen ebenfalls unter die vorliegende Erfindung. Das Gleiche gilt für andere Messgeräte zur Überwachung eines vorgegebenen Füllstands.

Die mechanisch schwingfähige Einheit 4 wird mittels der Antriebs-/Empfangseinheit 5, welche mit dem Anregesignal beaufschlagt wird, zu mechanischen Schwingungen angeregt, und kann beispielsweise ein Vier-Quadranten-Antrieb oder ein Bimorphantrieb sein. Weiterhin ist eine Elektronikeinheit 6 dargestellt, mittels welcher die Signalauswertung und/oder -speisung erfolgt. Die Elektronikeinheit dient also beispielsweise dazu, die Sensoreinheit 3 mittels eines geeigneten Anregesignals zu mechanischen Schwingungen anzuregen und ein Empfangssignal von der Sensor einheit 3 zu empfangen. Das Anregesignal wird im Falle eines vibronischen Sensors 1 anhand des Empfangssignals bestimmt, beispielsweise derart, dass zwischen dem Anregesignal und dem Empfangssignal eine vorgebbare Phasenverschiebung vorliegt. Anhand des Empfangssignals kann außerdem bestimmt werden, ob der vorgegebene Füllstand erreicht ist.

Der vibronischer Sensor 1 wird mittels einer Energieversorgungseinheit 7 über die Leiterschleife 8, beispielsweise eine sogenannte Zweidrahtleiterschleife, mit elektrischer Energie, beispielsweise in Form eines Wechselsignals, versorgt. Die Elektronikeinheit 6 erzeugt dann in Abhängigkeit davon, ob der vorgegebene Füllstand erreicht ist, ein Steuersignal, mittels welchem ein Prozess-Schaltelement 9, beispielsweise ein Relais, gesteuert wird, d.h. für das in Fig. 1 beschriebene Beispiel wird in Abhängigkeit des Erreichens des vorgegebenen Füllstands ein Schaltvorgang ausgelöst.

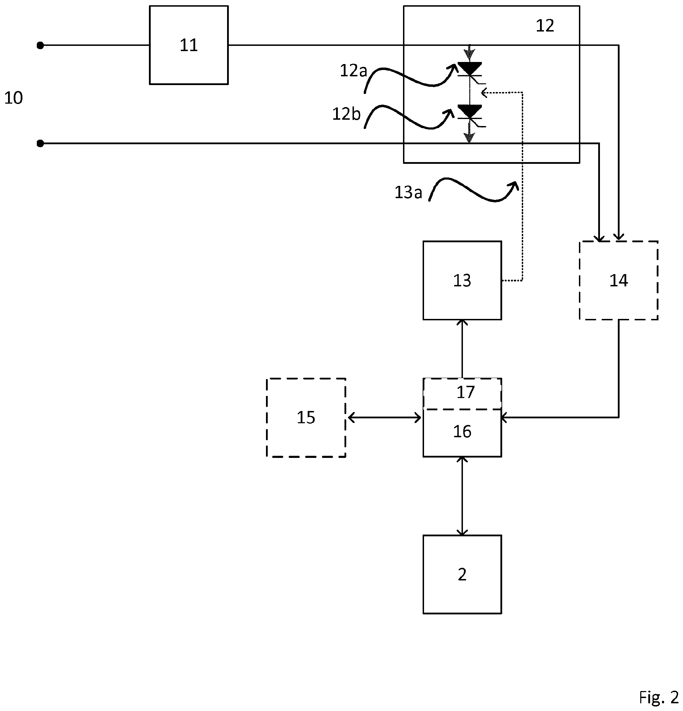

In Fig. 2 ist ein Blockdiagramm einer erfindungsgemäßen Elektronikeinheit 6 gezeigt. Über die Anschlussklemmen 10 ist das Messgerät 1 und damit insbesondere die Elektronikeinheit 6 an die Prozessschleife 7 anschließbar. Die Elektronikeinheit 6 umfasst eine Begrenzungseinheit 11 zur Begrenzung des elektrischen Stroms oder der elektrischen Spannung auf einen vorgebbaren Wert. Außerdem ist eine Schalteinheit 12 dargestellt. Mittels der Schalteinheit 12 wird das Relais 9 geschaltet. Zu diesem Zweck und für die Gewährleistung einer doppelten Ausfallsicherheit, umfasst die Schalteinheit 12 in der gezeigten Ausführung zwei in Reihe geschaltete Thyristoren 12a und 12b. Thyristoren 12a,12b stellen im Kontext der vorliegenden Erfindung eine bevorzugte Ausgestaltung für das Schaltelement dar, da es sich bei einem Thyristor um ein vergleichsweise robustes Bauelement, beispielsweise im Hinblick auf einen maximal zulässigen Strom oder eine maximal zulässige Spannung, handelt. Gleichzeitig wird zur Zündung eins Thyristors vorteilhaft nur ein vergleichsweise geringer Zündpuls benötigt. Es versteht sich jedoch von selbst, dass auch andere Arten von Schaltelementen 12a, 12b einsetzbar sind.

Mittels der Signalwandlungseinheit 13 wird das dynamische Signal partiell, hier innerhalb des Teilbereichs 13a, in ein statisches Signal gewandelt. Ferner ist die Signalwandlungseinheit 13 dazu ausgestaltet, einen ggf. vorhanden ungewollten statischen Signalanteil des dynamischen Signals, welcher durch eine Fehlfunktion bzw. einen Fehler zumindest einer Komponente der Elektronikeinheit 6 hervorgerufen wurde auszublenden. Für die Ausgestaltung gemäß Fig. 2 resultiert dies darin, dass die beiden Thyristoren 12a, 12b mit dem statischen Ausgangs-Signal der Signalwandlungseinheit 13 betrieben werden. Ferner wird dadurch, dass ungewollte, durch eine Fehlfunktion bzw. einen Fehler zumindest einer Komponente der Elektronikeinheit 6 hervorgerufene, statische Signalanteile ausgeblendet werden, vorteilhaft gewährleistet, dass keiner der beiden Thyristoren 12a, 12b ungewollt, also durch eine Fehlfunktion bzw. einen Fehler zumindest einer Komponente der Elektronikeinheit 6 bedingt, schaltet. Die Kombination eines dynamischen Signals in Zusammenhang mit der Ausblendung ungewollter statischer Signalanteile und dem partiellen Betrieb der Elektronikeinheit mittels eines statischen Signals führt also dazu, dass sowohl Einzelfehler einzelner Komponenten der Elektronikeinheit 6 also auch Folgefehler in der Signalübertragung innerhalb der Elektronikeinheit zu keinem gefährlichen Zustand im Sinne der Ausfallsicherheit nach SIL führen. Ein ungewolltes Schalten des Prozess-Schaltelements 9 kann in jedem der genannten Fälle vermieden werden.

Weiterhin ist der Elektronikeinheit 6 eine Recheneinheit 16, hier in Form eines Microcontrollers, zugeordnet. Mittels des Microcontrollers 16 erfolgt, wie allgemein in Zusammenhang mit Fig. 1 beschreiben, die Signalauswertung und/oder -speisung der Sensoreinheit 3. Zur Erhöhung der funktionalen Sicherheit des Messgeräts 1 ist ferner ein Watchdog 15 vorgesehen. Diese Komponente ist allerdings für die Funktionalität der erfindungsgemäßen Elektronikeinheit optional. Weitere optionale Komponenten betreffen eine Anpassungseinheit 17 zur Anpassung des vom Microcontroller ausgegebenen Signal auf das Eingangssignal des Prozess-Schaltelements 8, sowie eine Spannungsbegrenzungseinheit 14 zur Begrenzung einer Versorgungsspannung des Microcontrollers 16.

### Bezugszeichenliste

- 1: Feldgerät
- 2: Medium
- 2a: Behälter
- 3: Sensoreinheit
- 4: Schwingfähige Einheit in Form einer Schwinggabel
- 5: Antriebs-/Empfangseinheit
- 6: Elektronikeinheit
- 7: Energieversorgungseinheit
- 8: Prozesssleitschleife
- 9: Prozessschaltelement, hier Relais
- 10: Anschlussklemmen
- 11: Begrenzungseinheit
- 12: Schalteinheit
- 12a,12b: Thyristoren
- 13: Signalwandlungseinheit
- 13a: statisch betriebener Abschnitt
- 14: Spannungsbegrenhungseinheit
- 15: Watchdog
- 16: Recheneinheit, hier Microcontroller
- 17: Anpassungseinheit

## Patentansprüche

1. Vorrichtung (1) zur Bestimmung und/oder Überwachung zumindest eines vorgegebenen Füllstands eines Mediums (2) in einem Behältnis (2a) zumindest mit einer Sensoreinheit (3) und einer mittels eines dynamischen elektrischen Signals betreibbaren Elektronikeinheit (6),
welche Elektronikeinheit (6) zumindest umfasst
- eine Begrenzungseinheit (11), welche dazu ausgestaltet ist, einen elektrischen Strom oder eine elektrische Spannung in zumindest einem Teilbereich (13a) der Elektronikeinheit (6) auf einen vorgebbaren Wert zu begrenzen,
- eine Schalteinheit (12), welche dazu ausgestaltet ist, ein Prozess-Schaltelement (9), insbesondere ein Relais, mit zumindest einem ersten und einem zweiten Schaltzustand, mittels zumindest eines elektrischen Steuersignals zu steuern,
und
- eine Signalwandlungseinheit (13), welche Signalwandlungseinheit (13) dazu ausgestaltet ist, ein dynamisches elektrisches Eingangs-Signal in ein statisches elektrisches Ausgangs-Signal zu wandeln, wobei die Signalwandlungseinheit (13) ferner dazu ausgestaltet ist, einen ggf. vorhandenen ungewollten statischen Signalanteil des dynamischen elektrischen Eingangs-Signals, welcher durch eine Fehlfunktion bzw. einen Fehler zumindest einer Komponente der Elektronikeinheit (6) hervorgerufen wurde, auszublenden, und wobei die Signalwandlungseinheit (13) derart angeordnet ist, dass das statische Ausgangs-Signal durch zumindest eine Komponente (12a, 12b) der Schalteinheit (12) fließt,
wobei die Elektronikeinheit (6) dazu ausgestaltet ist,
- die Sensoreinheit (3) mit einem Anregesignal zu beaufschlagen, und von der Sensoreinheit (3) ein Empfangssignal zu empfangen,
- anhand des Empfangssignal zu bestimmen und/oder zu überwachen, ob der vorgegebene Füllstand erreicht ist, und
- in Abhängigkeit davon, ob der vorgegebene Füllstand erreicht ist, das zumindest eine Steuersignal zu erzeugen.

2. Vorrichtung (1) nach Anspruch 1,
wobei die Begrenzungseinheit (11) zumindest einen Spannungsregler, insbesondere einen Längsregler oder einen Schaltregler, einen Transistor, insbesondere einen Feldeffekttransistor, oder einen Verstärker, insbesondere einen Operationsverstärker oder eine Zener-Diode, umfasst.

3. Vorrichtung (1) nach Anspruch 1 oder 2,
wobei die Schalteinheit (12) zumindest einen Transistor, Thyristor (12a, 12b), ein steuerbares Schaltelement und/oder einen Verstärker umfasst.

4. Vorrichtung (1) nach zumindest einem der vorhergehenden Ansprüche, wobei die Schalteinheit (12) zumindest zwei baugleiche, in Reihe geschaltete Elemente umfasst.

5. Vorrichtung (1) nach zumindest einem der vorhergehenden Ansprüche, mit einer Anpassungseinheit (17), welche Anpassungseinheit dazu ausgestaltet ist, das zumindest eine elektrische Steuersignal auf ein Eingangssignal des Prozess-Schaltelements (9) anzupassen.

6. Vorrichtung (1) nach Anspruch 4,
wobei die Anpassungseinheit (17) zumindest einen Monoflop, einen Transistor, und/oder einen Microcontroller umfasst.

7. Vorrichtung (1) nach zumindest einem der vorhergehenden Ansprüche, wobei die Elektronikeinheit (6), insbesondere die Signalwandlungseinheit (13), dazu ausgestaltet ist, einen statischen Signalanteil des dynamischen Signals , welcher statische Signalanteil durch einen Fehler oder eine Fehlfunktion durch zumindest eine Komponente der Elektronikeinheit (6) hervorgerufenen ist, auszublenden.

8. Vorrichtung (1) nach zumindest einem der vorhergehenden Ansprüche, wobei die Signalwandlungseinheit (13) zumindest eine Einheit zur elektrischen Gleichrichtung, insbesondere umfassend eine Diode, einen Kondensator und/oder einen Widerstand, umfasst.

9. Vorrichtung (1) nach zumindest einem der vorhergehenden Ansprüche, wobei die Elektronikeinheit (6) eine Recheneinheit (16), insbesondere einen Microcontroller, umfasst.

10. Vorrichtung (1) nach Anspruch 10,
mit einem Watchdog (15), welcher dazu ausgestaltet ist, die Funktionsfähigkeit der Recheneinheit (16) und/oder die Versorgung der Recheneinheit (16) mit elektrischer Energie zu überwachen.

11. Vorrichtung (1) nach zumindest einem Ansprüche 10 oder 11,
mit einer Spannungsbegrenzungseinheit (14) zur Begrenzung einer Versorgungsspannung der Recheneinheit (16).

12. Vorrichtung (1) nach Anspruch 12,
wobei die Spannungsbegrenzungseinheit (14) zumindest einen Längsregler, einen Schaltregler, einen Transistor, insbesondere einen Feldeffekttransistor, oder einen Verstärker, insbesondere einen Operationsverstärker oder eine Zener-Diode umfasst.

## Claims

1. A device (1) for ascertaining and/or monitoring at least one prespecified fill level of a medium (2) in a container (2a) at least with a sensor unit (3) and a electronic unit (6) which can be operated using a dynamic electrical signal, said electronic unit (6) comprising at least
- a limiting unit (11) which is configured to limit an electric current or an electric voltage in at least one partial area (13a) of the electronic unit (6) to a value which can be prespecified,
- a switching unit (12) which is configured to control a process switching element (9), in particular a relay, with at least a first and a second switching state using at least one electrical control signal,
and
- a signal conversion unit (13), said signal conversion unit (13) being configured to convert a dynamic electrical input signal to a static electrical output signal, wherein the signal conversion unit (13) is furthermore configured to mask out an unwanted static signal component of the dynamic electrical input signal, if present, which has been caused by a malfunction or fault of at least one component of the electronic unit (6), and wherein the signal conversion unit (13) is arranged in such a way that the static output signal flows through at least one component (12a, 12b) of the switching unit (12),
wherein the electronic unit (6) is configured to
- apply an activation signal to the sensor unit (3) and receive a receive signal from the sensor unit (3),
- use the receive signal to ascertain and/or monitor whether the prespecified fill level has been reached and
- generate the at least one control signal depending on whether or not the prespecified fill level has been reached.

2. The device (1) as claimed in claim 1,
wherein the limiting unit (11) comprises at least a voltage controller, in particular a linear controller or a switch controller, a transistor, in particular a field-effect transistor, or an amplifier, in particular an operational amplifier, or a Zener diode.

3. The device (1) as claimed in claim 1 or 2,
wherein the switching element (12) comprises at least a transistor, a thyristor (12a, 12b), a controllable switching element and/or an amplifier.

4. The device (1) as claimed in at least one of the preceding claims, wherein the switching unit (12) comprises at least two structurally identical elements connected in series.

5. The device (1) as claimed in at least one of the preceding claims, with an adaptation unit (17), said adaptation unit being configured to adapt the at least one electrical control signal to an input signal of the process switching element (9).

6. The device (1) as claimed in claim 4,
wherein the adaptation unit (17) comprises at least a monoflop, a transistor, and/or a microcontroller.

7. The device (1) as claimed in at least one of the preceding claims, wherein the electronic unit (6), in particular the signal conversion unit (13), is configured to mask out a static signal component of the dynamic signal, said static signal component being caused by a fault or a malfunction of at least one component of the electronic unit (6).

8. The device (1) as claimed in at least one of the preceding claims, wherein the signal conversion unit (13) comprises at least a unit for electrical rectification, in particular comprising a diode, a capacitor and/or a resistor.

9. The device (1) as claimed in at least one of the preceding claims, wherein the electronic unit (6) comprises an arithmetic-logic unit (16), in particular a microcontroller.

10. The device (1) as claimed in claim 10,
with a watchdog (15) which is configured to monitor the functionality of the arithmetic-logic unit (16) and/or the power supply to the arithmetic-logic unit (16).

11. The device (1) as claimed in at least one of claims 10 or 11,
with a voltage limiting unit (14) to limit a supply voltage to the arithmetic-logic unit (16).

12. The device (1) as claimed in claim 12,
wherein the voltage limiting unit (14) comprises at least a linear controller, a switch controller, a transistor, in particular a field-effect transistor, or an amplifier, in particular an operational amplifier, or a Zener diode.

## Revendications

1. Dispositif (1) destiné à la détermination et/ou à la surveillance d'au moins un niveau prédéfini d'un produit (2) se trouvant dans un réservoir (2a), lequel dispositif comprend au moins une unité de capteur (3) et une unité électronique (6) pouvant fonctionner au moyen d'un signal électrique dynamique, laquelle unité électronique (6) comprend au moins
- une unité de limitation (11), laquelle est conçue pour limiter un courant électrique ou une tension électrique dans au moins une zone partielle (13a) de l'unité électronique (6) à une valeur pouvant être prédéfinie,
- une unité de commutation (12), laquelle est conçue pour commander un élément de commutation de process (9), notamment un relais, avec au moins un premier et un deuxième état de commutation, au moyen d'au moins un signal de commande électrique,
et
- une unité de conversion de signal (13), laquelle unité de conversion de signal (13) est conçue pour convertir un signal d'entrée électrique dynamique en un signal de sortie électrique statique, l'unité de conversion de signal (13) étant en outre conçue pour supprimer une composante de signal statique indésirable, éventuellement présente, du signal d'entrée électrique dynamique, laquelle composante est due à un dysfonctionnement ou à un défaut d'au moins un composant de l'unité électronique, et
l'unité de conversion de signal (13) étant disposée de telle sorte que le signal de sortie statique passe par au moins un composant (12a, 12b) de l'unité de commutation (12),
l'unité électronique (6) étant conçue pour
- appliquer un signal d'excitation à l'unité de capteur (3) et pour recevoir un signal de réception de l'unité de capteur (3),
- déterminer et/ou surveiller, à l'aide du signal de réception, si le niveau prédéfini est atteint et,
- en fonction du fait que le niveau prédéfini est atteint, générer l'au moins un signal de commande.

2. Dispositif (1) selon la revendication 1,
pour lequel l'unité de limitation (11) comprend au moins un régulateur de tension, notamment un régulateur différentiel ou un régulateur à découpage, un transistor, notamment un transistor à effet de champ, ou un amplificateur, notamment un amplificateur opérationnel, ou une diode Zener.

3. Dispositif (1) selon la revendication 1 ou 2,
pour lequel l'unité de commutation (12) comprend au moins un transistor, un thyristor (12a, 12b), un élément de commutation contrôlable et/ou un amplificateur.

4. Dispositif (1) selon au moins l'une des revendications précédentes,
pour lequel l'unité de commutation (12) comprend au moins deux éléments identiques connectés en série.

5. Dispositif (1) selon au moins l'une des revendications précédentes,
avec une unité d'adaptation (17), laquelle unité d'adaptation est conçue pour adapter l'au moins un signal de commande électrique à un signal d'entrée de l'élément de commutation de process (9).

6. Dispositif (1) selon la revendication 4,
pour lequel l'unité d'adaptation (17) comprend au moins une bascule monostable, un transistor et/ou un microcontrôleur.

7. Dispositif (1) selon au moins l'une des revendications précédentes,
pour lequel l'unité électronique (6), notamment l'unité de conversion de signal (13), est conçue pour supprimer une composante de signal statique du signal dynamique, laquelle composante de signal statique est due à un défaut ou à un dysfonctionnement d'au moins un composant de l'unité électronique (6).

8. Dispositif (1) selon au moins l'une des revendications précédentes,
pour lequel l'unité de conversion de signal (13) comprend au moins une unité de redressement électrique, laquelle comprend notamment une diode, un condensateur et/ou une résistance.

9. Dispositif (1) selon au moins l'une des revendications précédentes,
pour lequel l'unité électronique (6) comprend une unité de calcul (16), notamment un microcontrôleur.

10. Dispositif (1) selon la revendication 10,
avec un chien de garde (15), lequel est conçu pour surveiller la capacité de fonctionnement de l'unité de calcul (16) et/ou l'alimentation de l'unité de calcul (16) en énergie électrique.

11. Dispositif (1) selon au moins l'une des revendications 10 ou 11,
avec une unité de limitation de tension (14) destinée à limiter une tension d'alimentation de l'unité de calcul (16).

12. Dispositif (1) selon la revendication 12,
pour lequel l'unité de limitation de tension (14) comprend au moins un régulateur différentiel, un régulateur à découpage, un transistor, notamment un transistor à effet de champ, ou un amplificateur, notamment un amplificateur opérationnel, ou une diode Zener.
